# EUROPÄISCHE PATENTSCHRIFT

(11) **EP 2 609 049 B1**
(45) Veröffentlichungstag und Bekanntmachung des Hinweises auf die Patenterteilung: **08.10.2014**
(21) Anmeldenummer: 11754855.2
(22) Anmeldetag: 29.08.2011
(51) Int. Cl.: C09D 5/22, C03B 11/14, C03C 27/06, C04B 41/00, C04B 41/48, C09D 7/12, C04B 41/63, C09K 11/00, C09K 11/02, C09K 11/08, C08K 3/36, C08K 3/40, C08K 9/10, C04B 111/80

(54) **PHOSPHORESZIERENDE ZUSAMMENSETZUNGEN UND IHRE VERWENDUNG**
PHOSPHORESCENT COMPOSITIONS AND USE THEREOF
COMPOSITIONS PHOSPHORESCENTES ET LEUR UTILISATION

(30) Priorität: 27.08.2010 DE 102010039885
(43) Veröffentlichungstag der Anmeldung: 03.07.2013
(73) Patentinhaber: Friedrich, Diana, 87660 Irsee (DE)
(72) Erfinder: Friedrich, Diana, 87660 Irsee (DE)
(74) Vertreter: Winter, Brandl, Fürniss, Hübner, Röss, Kaiser, Polte - Partnerschaft mbB
(86) Internationale Anmeldenummer: PCT/EP2011/064828
(87) Internationale Veröffentlichungsnummer: WO 2012/025634

(56) Entgegenhaltungen:
- WO-A2-2011/015604
- DE-A1- 2 426 919
- DE-C1- 10 130 011
- GB-A- 1 484 471
- US-A1- 2004 146 349
- DATABASE WPI Week 200880 Thomson Scientific, London, GB; AN 2008-N81422 XP002663387, & KR 2008 0016382 A (CHAE J S) 21. Februar 2008 (2008-02-21)
- DATABASE WPI Week 200729 Thomson Scientific, London, GB; AN 2007-299300 XP002663388, -& NL 1 029 291 C2 (NEXT GENERATION BV) 22. Dezember 2006 (2006-12-22)
- DATABASE WPI Week 201135 Thomson Scientific, London, GB; AN 2011-E03028 XP002663389, & CN 101 974 264 A (SHENZHEN HUAXI BIOTECHNOLOGY CO LTD) 16. Februar 2011 (2011-02-16)

## Beschreibung

Die Erfindung betrifft phosphoreszierende Zusammensetzungen sowie Lacke und Farben, die diese enthalten. Die Erfindung betrifft ferner Artikel, die unter Verwendung dieser Zusammensetzungen, Farben oder Lacke hergestellt sind, und ein Verfahren zur Herstellung nachleuchtender Glasartikel.

Phosphoreszenzpigmente, auch als Nachleuchtpigmente bezeichnet, sind im Anwendungsmedium unlöslich und haben die Eigenschaft, einfallendes Licht im sichtbaren und insbesondere unsichtbaren Bereich (UV-Bereich) speichern zu können und die gespeicherte Energie zeitverzögert über einen längeren Zeitraum in Form von sichtbarem Licht wieder abzugeben. Phosphoreszenzpigmente können daher zur Herstellung von im Dunkeln nachleuchtenden Farben und Lacken und sog. "Glow-in-the-dark"-Artikeln verwendet werden. So können phosphoreszierende oder nachleuchtende Materialien zu Informations-, Sicherheits- und Dekorationszwecken auf den verschiedensten Artikeln und Oberflächen eingesetzt werden, beispielsweise als Leitmarkierungen für Notausgänge und zum Kenntlichmachen von Treppenstufen.

Um einen starken und anhaltenden Nachleuchteffekt zu erreichen, benötigt man jedoch große Mengen dieser Pigmente, wodurch die Herstellung dieser Produkte wegen der hohen Kosten für die Pigmente teuer ist. Die Phosphoreszenzpigmente müssen ferner über einen längeren Zeitraum mit Licht bestrahlt werden, um den gewünschten Nachleuchteffekt zu erzielen, und die Dauer der Nachleuchtzeit der Pigmente ist häufig kurz. Herkömmliche nachleuchtende Farben und Lacke neigen wegen ihres hohen Pigmentgehalts beim Auftragen auf das Substrat außerdem zu Sedimentation und Klumpenbildung und können ein unhomogenes und grobkörniges Erscheinungsbild aufweisen. Ferner haften die Farben und Lacke häufig schlecht auf Substraten wie Glas, Stein oder Textil. So werden phosphoreszierende Anstriche auf Bodenbelägen mit der Zeit durch Beanspruchung abgetragen oder sie verwittern. Nachleuchtende Klebematerialien oder Plastikstreifen, wie sie stattdessen beispielsweise zur Markierung auf Beton, wie auf Treppenstufen, verwendet werden, lösen sich wegen der starken Beanspruchung und wegen der schlechten Haftung auf dem porösen Untergrund leicht ab.

DE-A-23 61 569 beschreibt ein Signal- und Warnmaterial, bei dessen Herstellung eine Mischung aus fluoreszierenden, phosphoreszierenden und reflektierenden Substanzen eingesetzt wird. In diesem Zusammenhang erwähnt diese Druckschrift auch Oberflächen mit Reflexwirkung, die aus Harzen und kristallinen Substanzen oder Glaspulver hergestellt werden. Der Nachteil von Zusammensetzungen, die Glaspulver und phosphoreszierende Substanzen enthalten, besteht jedoch darin, dass es insbesondere bei Kontakt mit Feuchtigkeit zu chemischen Reaktionen kommen kann, bei denen schädliche Gase wie Schwefelwasserstoff und Schwefeldioxid entstehen können und/oder durch die es zu Farbänderungen, der Zerstörung der Pigmente und letztendlich zu einem vollständigen Verlust der Leuchtkraft kommen kann.

EP-A-0 182 744 beschreibt photohärtbare Epoxidharz-Zusammensetzungen, die ein Epoxidharz und einen Photoinitiator umfassen, und die weiterhin Füllstoffe, beispielsweise elektrisch und thermisch leitende Füllstoffe, Ferroelektrika und phosphoreszierende Füllstoffe, und Flussmittel, beispielsweise Glaspulver, enthalten können, wobei Flussmittel lediglich im Falle keramischer Anwendungen eingesetzt werden. Soweit Glaspulver verwendet werden, kommen diese jedoch nur zusammen mit elektrisch leitenden oder dielektrischen Füllstoffen zum Einsatz. Beispiele, die phosphoreszierende Füllstoffe und Glaspulver enthalten, werden nicht beschrieben.

WO 2009/089920 beschreibt phosphoreszierende Betonmischungen, die photolumineszierende Leuchtpigmente umfassen. Die Verwendung von derartig produzierten Betonsteinen, z. B. im Bereich von Bodenverlegung, hat jedoch den Nachteil, dass diese Steine aufgrund der Menge an einzusetzendem Pigmentmaterial sehr teuer sind, da Beton nicht lichtdurchlässig ist und somit nur die oberste Deckschicht des Steins leuchtet. Mindestens 50% des eingesetzten Pigmentmaterials bleibt daher ohne sichtbare Wirkung. Die ebenfalls beschriebene Verwendung von Quarzmehl als Transparenzverstärker ist außerdem sehr kostspielig.

US 2004/0146349 A1 offenbart eine phosphoreszierende Zusammensetzung zur Straßenmarkierung, die Phosphoreszenzpigment, Bindemittel, lichtdurchlässige Zuschlagstoffe wie Quarz mit einer Teilchengröße von 0,3 bis 10 mm und anorganische Füllstoffe wie Calciumcarbonat-, Glas- und Kunststoffpulver enthält.

GB 1 484 471 A beschreibt ein phosphoreszierendes Material, das neben phosphoreszierenden Substanzen einen Füllstoff wie Quarzmehl enthält und als Polymerbeton verwendet werden kann.

DE 24 26 919 A beschreibt phosphoreszierende Baumaterialien, die Zinksulfid und gemahlenes Quarzglas enthalten.

KR 20080016382 A offenbart Urethanzusammensetzungen, die neben Phosphoreszenz- und Fluoreszenzpigmenten auch Glaskügelchen enthalten können und zur Herstellung von Verkehrsschildern geeignet sind.

NL 1029291 C beschreibt Druckerfarbe, die neben Phosphoreszenzpigment auch Glashohlkügelchen enthält.

Aufgabe der vorliegenden Erfindung ist es, im Dunkeln nachleuchtende Farben, Lacke und Artikel bereitzustellen, die ein gutes Erscheinungsbild aufweisen und kostensgünstig herzustellen sind, wobei die Pigmente in relativ kurzer Zeit aufgeladen werden können und die Farben und Artikel eine lange Leuchtdauer haben. Eine weitere Aufgabe besteht darin, Lacke und Farben, insbesondere zum Aufsprühen, bereitzustellen, die sowohl im Innen- als auch im Außenbereich eingesetzt werden können, auf Materialien wie Textil, Metall, Stein, Glas, Plastik, Beton, Holz und Asphalt haften und einfach zu applizieren sind.

Diese Aufgaben wurden mit Hilfe der phosphoreszierenden Zusammensetzungen der vorliegenden Erfindung gelöst, die umfassen:
(a) Glaspulver, wobei das Glaspulver bleifreies Glaspulver ist, das ausgewählt ist aus Kalk-Natron-Gläsern, Borosilikatgläsern, Floatgläsern und Phosphatgläsern, wobei das Glaspulver eine Teilchengröße d100 von 350 µm aufweist; und
(b) Phosphoreszenzpigment, wobei das Phosphoreszenzpigment wenigstens ein gekapseltes Phosphoreszenzpigment umfasst.

Glaspulver aus Kalk-Natron-Gläsern, Borosilikatgläsern, Floatgläsern und Phosphatgläsern weisen auf Grund ihres Herstellungsprozesses und der dabei verwendeten Zuschlagstoffe regelmäßig einen gewissen Bleigehalt auf. Es wurde nun gefunden, dass Zusammensetzungen, die bleifreies Glaspulver enthalten, bei Lagerung und bei Kontakt mit Feuchtigkeit länger stabil sind als Zusammensetzungen, die herkömmliche bleihaltige Gläser enthalten. Die Zusammensetzungen ermöglichen es außerdem, die Menge an eingesetztem Phosphoreszenzpigment deutlich zu reduzieren, ohne dabei die Nachleuchtdauer der mit den erfindungsgemäßen Zusammensetzungen behandelten Produkte zu vermindern. Gleichzeitig lässt sich die Dauer, über die die Pigmente Licht ausgesetzt sein müssen, um ausreichend Energie zu speichern, verringern. Die Zusammensetzungen haften gut auf Substraten wie Glas und Textil und zeigen gute Trocknung. Die Produkte zeigen aufgrund der Anwesenheit des Glaspulvers zudem ein sehr homogenes, feinkörniges und helles Erscheinungsbild.

Vorzugsweise werden bleifreie Glaspulver verwendet, die außerdem frei von Barium, Arsen und Antimon sind, die üblicherweise in den zur Glasherstellung verwendeten Ausgangsmaterialien vorhanden sind oder bei der Glasherstellung, beispielweise in Form von Bariumoxid oder Antimonoxid, als Läuterungsmittel eingesetzt werden. Vorzugsweise beträgt der Eisengehalt im Glaspulver 0,05 Gew.-% oder weniger, vorzugsweise 0,01 Gew.% oder weniger, bezogen auf die Masse des Glaspulvers. Glaspulver, die frei von den oben genannten Substanzen sind, lassen sich nach üblichen Verfahren zur Glasherstellung erhalten, wenn darauf geachtet wird, dass die Glasherstellung unter Verwendung von Ausgangsmaterialien erfolgt, die frei von den genannten Substanzen sind. Solche Gläser sind im Stand der Technik bekannt. Blei- und bariumfreies Glas wird beispielsweise in der WO 2005/090252 beschrieben.

Durch die Verwendung bleifreier Glaspulver aus Kalk-Natron-Gläsern, Borosilikatgläsern, Floatgläsern und Phosphatgläsern können die Herstellungskosten weiter gesenkt werden. Besonders bevorzugt werden Kalk-Natron-Gläsern und Borosilikatgläsern verwendet. Je nach Anwendungsbereich können gefärbte oder farblose Glaspulver verwendet werden. Die Dichte des verwendeten Glases liegt vorzugsweise im Bereich von 2,3 bis 2,8 g/cm³, besonders bevorzugt im Bereich von 2,4 bis 2,7 g/cm³, beispielsweise bei etwa 2,5 g/cm³.

Das Glaspulver kann durch Vermahlen des jeweiligen Glases hergestellt werden und hat eine Teilchengröße d100 von 350 µm, d.h. dass 100 Gew.-% der Glaspulverteilchen eine Teilchengröße von bis zu 350 µm aufweisen können und kein Teilchen größer als 350 µm ist. Als Glaspulver kann eine einzige Glaspulverqualität verwendet werden oder es können Mischungen aus zwei oder mehr Glaspulverqualitäten mit unterschiedlichen Teilchengrößen oder Teilchengrößenverteilungen verwendet werden. Durch die feinere Korngrößenverteilung, die durch die Zugabe von Glaspulver zu dem Phosphoreszenzpigment erreicht wird, und die geringere Dichte des Glases im Vergleich mit dem Phosphoreszenzpigment wird die Sedimentation des Pigments in Farben oder Lacken auf Grund seiner hohen spezifischen Dichte vermindert und verlangsamt, so dass das Pulvergemisch länger in der Schwebe bleibt und nicht so schnell am Boden der Applikationsmaschine verklumpt. Teilchengrößen und Teilchengrößenverteilungen lassen sich nach standardisierten Verfahren durch Siebanalyse gemäß DIN 66165-1 und 66165-2 bestimmen.

Das Glaspulver liegt bevorzugt in einer Menge von 15 bis 85 Gew.-% vor, bezogen auf das Gesamtgewicht von Glaspulver und Phosphoreszenzpigment in der Zusammensetzung. Bevorzugt beträgt die Menge an Glaspulver 20 bis 80 Gew.-%, besonders bevorzugt 25 bis 75 Gew.-%.

Als Phosphoreszenzpigmente werden bevorzugt anorganische Phosphoreszenzpigmente, besonders bevorzugt nichtradioaktive anorganische Phosphoreszenzpigmente verwendet. Das Phosphoreszenzpigment kann aus einem einzigen Pigment bestehen, vorzugsweise besteht es jedoch aus Mischungen unterschiedlicher Pigmente.

Erfindungsgemäß geeignete Phosphoreszenzpigmente sind insbesondere Oxide von seltenen Erden und Sulfide, Selenide, Silicate, Aluminate, Fluoroaluminate, Phosphate, Halophosphate, Borate, Germanate, Vanadate, Molybdate und Wolframate von bevorzugt zweiwertigen Metallen wie Zn, Mn, den Erdalkalimetallen Be, Mg, Ca, Sr und Ba, und den Seltenerdmetallen, wobei die Pigmente entweder als Reinstoffphosphore oder dotiert mit Schwermetallen wie Bi, Sn, Cu, Tl, Al, Mn, Pb und Seltenerdmetallen, insbesondere La, Ce, Pr, Nd, Sm, Eu, Gd, Dy, Tb, Ho, Er, Tm, Yb und Lu vorliegen können. Besonders bevorzugt umfasst die erfindungsgemäße Zusammensetzung wenigstens ein Phosphoreszenzpigment, das ausgewählt ist aus Sulfiden, Aluminaten und Silicaten, die mit ein oder mehr Schwermetallen und/oder Seltenerdmetallen dotiert sind. Beispiele für erfindungsgemäß geeignete Sulfide sind ZnS, beispielsweise dotiert mit Cu (ZnS:Cu), CaS:Bi und CaCdS:Cu. Zu den erfindungsgemäß geeigneten Aluminaten gehören die Erdalkalialuminate, beispielsweise solche, wie sie in der US-A-5.424.006 und der US-A-5.686.022 beschrieben sind. Erfindungsgemäß besonders geeignet sind Phosphoreszenzpigmente, die eine Verbindung der allgemeinen Formel MAl₂O₄ umfassen, wobei M wenigstens ein Element bedeutet, das aus Ca, Sr und Ba ausgewählt ist, oder eine Verbindung der Formel M₁₋ₓAl₂O₄₋ₓ, wobei M die obige Bedeutung hat oder eine Kombination dieser Elemente mit Mg darstellt, und x im Bereich von -0,33 ≤ x ≤ 0,60 (außer x=0) liegt. Solche Erdalkalialuminate sind mit wenigstens einem Seltenerdmetall, insbesondere Europium (Eu) und/oder Dysprosium (Dy) dotiert. Besonders bevorzugt ist mit Eu und/oder Dy dotiertes Strontiumaluminat (SrAl₂O₄:Eu,Dy). Erfindungsgemäß geeignete Silicate sind beispielsweise Zn₂SiO₄ und Erdalkalisilicate. Besonders bevorzugt ist ein Phosphoreszenzpigment, das mindestens ein wie oben beschriebenes Pigment auf Basis eines Sulfids oder Aluminats oder Mischungen davon umfasst. Es hat sich gezeigt, dass Zusammensetzungen, die als Phosphoreszenzpigmente Pigmente auf Basis eines Aluminats, insbesondere eines Erdalkalialuminats, enthalten oder aus diesen bestehen, eine noch längere Stabilität und Leuchtkraft der mit solchen Zusammensetzungen hergestellten Produkte ermöglichen. Geeignete Phosphoreszenzpigmente sind im Handel erhältlich, beispielsweise unter dem Markennamen Lumilux^{®}.

Gemäß einer weiteren Ausführungsform umfasst das Phosphoreszenzpigment wenigstens ein Wolframat, wobei das eingesetzte Phosphoreszenzpigment vorzugsweise eine Wolframat enthaltende Pigmentmischung ist. Beispiele für erfindungsgemäße Wolframate sind CaWO₄ und MgWO₄, wobei MgWO₄ besonders bevorzugt ist. Ein solches Wolframat wird üblicherweise in einer Menge von 0.0001 Gew.-% bis 5 Gew.-% eingesetzt, bezogen auf das Gesamtgewicht des Phosphoreszenzpigments. Es wurde gefunden, dass sich durch eine Mischung von Phosphoreszenzpigmenten, die Wolframate, insbesondere MgWO₄, enthalten, die Helligkeit des Nachleuchtens der erfindungsgemäßen Zusammensetzungen im Anwendungsmedium nochmals verbessern lässt.

Das Phosphoreszenzpigment umfasst wenigstens ein gekapseltes, d. h. ummanteltes Pigment und kann eine Mischung aus ungekapseltem und gekapseltem Pigment sein. Gekapselte Pigmente sind dem Fachmann bekannt. Erfindungsgemäß geeignete gekapselte Pigmente sind beispielsweise mit Glas, Kunststoff oder SiO₂ ummantelt. Solche gekapselten Pigmente haben eine höhere Hitze- und Feuchtigkeitsbeständigkeit und kommen daher insbesondere zum Einsatz, wenn die Zusammensetzungen unter Bedingungen hoher Temperaturen und/oder Feuchtigkeit verwendet werden. Gekapselte Pigmente weisen ferner eine erhöhte UV-Beständigkeit auf, sind unlöslich in organischen Lösungsmitteln und sind beständig gegen Säuren und wässrige Medien. Der Anteil gekapselter Pigmente an der Gesamtmenge des Phosphoreszenzpigments beträgt unter diesen Umständen üblicherweise wenigstens 5 Gew.-%, bevorzugt wenigstens 10 Gew.-%, besonders bevorzugt wenigstens 30 Gew.-%, und kann bis zu 100 Gew.-% betragen.

Das Phosphoreszenzpigment in ungekapselter oder gekapselter Form hat bevorzugt eine Teilchengröße d100 von 500 µm, d.h. dass 100 Gew.-% der Teilchen eine Teilchengröße von bis zu 500 µm aufweisen können. Bevorzugt hat das Phosphoreszenzpigment eine Teilchengröße d100 von 350 µm. Das Phosphoreszenzpigment kann auch eine Mischung aus Pigmenten mit unterschiedlichen Teilchengrößenverteilungen darstellen. Vorzugsweise weist das Phosphoreszenzpigment wenigstens eine Pigmentfraktion mit einer Teilchengröße d50 zwischen 1 und 100 µm, vorzugsweise zwischen 1 und 80 µm, auf. Mischungen aus Pigmenten mit unterschiedlichen mittleren Teilchengrößen führen einerseits zu einem gleichmäßigeren Leuchteindruck und können sich außerdem insbesondere als vorteilhaft erweisen, um eine rasche Sedimentation der Teilchen in einem Anwendungsmedium, beispielsweise einem Bindemittel für Farben und Lacke, zu vermeiden. Teilchengrößen und Teilchengrößenverteilungen lassen sich wie bei dem Glaspulver auf übliche Weise durch Siebanalyse gemäß DIN 66165-1 und 66165-2 bestimmen.

Das Phosphoreszenzpigment in der erfindungsgemäßen Zusammensetzung liegt bevorzugt in einer Menge von 85-15 Gew.-% vor, bezogen auf das Gesamtgewicht von Glaspulver und Phosphoreszenzpigment. Vorteilhaft liegt die Menge Phosphoreszenzpigment im Bereich von 80 bis 20 Gew.-%, besonders bevorzugt von 75 bis 25 Gew.-%.

Vorzugsweise weist wenigstens eines der in der Zusammensetzung enthaltenen Phosphoreszenzpigmente eine Nachleuchtintensität nach 10 min, bestimmt nach DIN 67510, von wenigstens 3,0 mcd/m², vorzugsweise von wenigstens 10 mcd/m², besonders bevorzugt von wenigstens 50 mcd/m² auf.

Weiterhin bevorzugt weist die erfindungsgemäße Zusammensetzung wenigstens ein Phosphoreszenzpigment auf, dessen Emissionswellenlänge λₘₐₓ (Emissionsmaximum) in einem Wellenlängenbereich von 380 bis 500 nm (violett bis blau), einem Wellenlängenbereich von 510 bis 580 (grün) oder einem Wellenlängenbereich von 590 bis 750 nm (rot) liegt. Im grünen oder im blauen Bereich emittierende Phosphoreszenzpigmente sind beispielsweise Zn₂SiO₄:Mn, ZnS:Cu, SrAl₂O₄:Eu, BaAl₂O₄:Eu und CaAl₂O₄:Eu, ein im violetten Bereich emittierendes Pigment ist CaAl₂O₄:Eu,Nd, und ein im roten Bereich emittierendes Phosphoreszenzpigment ist beispielsweise CaS:Eu,Tm. Bevorzugt werden im violetten, blauen und grünen Bereich phosphoreszierende Pigmente verwendet. Vorzugsweise weist wenigstens eines der im violetten, blauen oder grünen Bereich emittierenden Phosphoreszenzpigmente eine Nachleuchtintensität, bestimmt nach DIN 67510, von wenigstens 10 mcd/m², besonders bevorzugt von wenigstens 50 mcd/m², nach 10 min auf, und wenigstens eines der im roten Bereich emittierenden Phosphoreszenzpigmente weist vorzugsweise eine Nachleuchtintensität von wenigstens 3,0 mcd/m², besonders bevorzugt von wenigstens 4,0 mcd/m², nach 10 min auf. Durch Mischen unterschiedlicher Phosphoreszenzpigmente lassen sich verschiedene Farbeffekte erzielen. Beispielsweise lässt sich durch Mischen geeignet dotierter Erdalkalialuminate und -silicate, beispielsweise solcher, die im blauen, grünen und roten Bereich emittieren, auch ein weißes Nachleuchten erreichen.

Gemäß einer weiteren Ausführungsform enthält die erfindungsgemäße Zusammensetzung neben dem Phosphoreszenzpigment auch ein Fluoreszenzpigment (Tagesleuchtpigment). Unter Fluoreszenzpigmenten werden solche Pigmente verstanden, die nur Licht emittieren, solange sie mit Licht, insbesondere UV-Licht, bestrahlt werden, d. h. die Lichtemission endet regelmäßig innerhalb von weniger als einer tausendstel Sekunde nach der Bestrahlung. Geeignete Fluoreszenzpigmente sind bevorzugt anorganische Fluoreszenzpigmente wie Oxysulfide der Seltenerdmetalle, insbesondere mit Eu dotiertes Yttriumoxysulfid (Y₂O₂S:Eu), sowie metalldotierte Sulfide wie ZnS. Der Anteil des Fluoreszenzpigments in der Zusammensetzung beträgt bevorzugt wenigstens 10 Gewichtsteile Fluoreszenzpigment pro 100 Gewichtsteile Gesamtmasse von Glaspulver und Phosphoreszenzpigment. Die Anwesenheit eines solchen Fluoreszenzpigments ermöglicht auch während der Zeit, in der das Phosphoreszenzpigment aufgeladen wird und Energie speichert, ein Leuchten des mit der erfindungsgemäßen Zusammensetzung behandelten Gegenstandes. Der Leuchteffekt tritt daher zusätzlich unter Anstrahlung der Objekte mit UV-haltigem Licht, je nach Pigment auch nur unter bestimmten Frequenzen in Erscheinung. Fluoreszierende Pigmente können bei Tageslicht verschiedene Farbgebungen aufweisen. Die Tageslichtfarbe und die auftretende Leuchtfarbe bei Bestrahlung mit Licht der Aktivierungsfrequenz können unterschiedlich oder gleich sein.

Gemäß einer weiteren Ausführungsform kann die erfindungsgemäße Zusammensetzung außerdem Effektpulver, beispielsweise Metallpulver, insbesondere Edelmetallpulver, wie Silber- und Goldpulver, und Magnetpulver, enthalten, wobei die Teilchengröße d100 der Pulver bevorzugt 500 µm, besonders bevorzugt 200 µm beträgt. Die Anwesenheit eines solchen Pulvers führt in Verbindung mit den Phosphoreszenz- und Fluoreszenzeffekten zu einem besonderen Erscheinungsbild der mit den Zusammensetzungen behandelten Gegenstände, beispielsweise zu Metallic-Effekten.

Die erfindungsgemäßen Zusammensetzungen können zur Herstellung von Lacken und Farben verwendet werden. Hierzu werden die Zusammensetzungen, die gefärbtes oder farbloses, bevorzugt farbloses Glaspulver enthalten können, in ein für Lacke und Farben übliches Bindemittel eingebracht. Beispiele für geeignete Bindemittel sind natürliche Harze und Öle, Kalk, Leim oder bevorzugt Bindemittel auf Kunststoffbasis, beispielsweise Bindemittel auf Basis von Alkydharzen, Acryl- und Methacrylatharzen, Polyvinylacetat-Copolymeren, Epoxidharzen, Polyurethanen und Mischungen davon. Gegebenenfalls enthalten die erfindungsgemäßen Farb- oder Lackzusammensetzungen übliche organische Lösungsmittel, beispielsweise aliphatische, cycloaliphatische oder aromatische Kohlenwasserstoffe, wie Hexan, Cyclohexan und Xylol, ein- oder mehrwertige Alkohole, wie Propan, n-Butan, Isobutan und Glycol, Glycolether, wie Butylglycol, Butyldiglycol, Ethylenglycol und Dietylglycol, Ketone, wie Aceton und Methylethylketon, und Ester, wie Butylacetat, Ethylacetat und Butylglycolacetat, oder sie liegen als Dispersion in Wasser vor. Gegebenenfalls enthalten die Zusammensetzungen weitere übliche Additive wie Härtungsbeschleuniger und Weichmacher. Bevorzugt sind Bindemittel auf Basis von Acrylharzen. Die Mengen, in denen die erfindungsgemäße Zusammensetzung in das Bindemittel eingebracht wird, entsprechen den bei Lacken und Farben auch für andere Pigmente üblichen Mengen. Die einzubringenden Mengen hängen auch vom gewünschten Effekt ab und lassen sich vom Fachmann durch einfache Versuche leicht bestimmen. Üblicherweise liegt das Gewichtsverhältnis von phosphoreszierender Zusammensetzung zu Bindemittel im Bereich von 1:6 bis 6:1, bevorzugt von 1:4 bis 4:1.

Die erfindungsgemäßen Farben und Lacke eignen sich hervorragend zum Beschichten der verschiedenartigsten Trägermaterialien, beispielsweise Holz, Natur- und Kunststein, Beton und Stahlbeton, Metalle, Plastik, Textilien, Papier, Glas, Keramik, Asphalt und Emaille, auf die sie in üblicher Weise, beispielsweise durch Aufsprühen, Aufstreichen oder Eintauchen aufgebracht werden können. Gegebenenfalls kann der Träger zunächst mit einer üblichen Grundierung versehen werden, bevor die erfindungsgemäßen Lacke oder Farben aufgebracht werden. Bevorzugt werden helle Grundierungen verwendet, da dann der Leuchteffekt am besten zur Geltung kommt. Die Schicht aus den erfindungsgemäßen Farben und Lacken wird üblicherweise mit einem vorteilhaft wenigstens teilweise UV-durchlässigen Klarlack als Deck- oder Schutzschicht versehen, beispielsweise einem Zweikomponenten-Klarlack auf Polyurethanbasis, der die Pigmentschicht vor Wasser und Abrieb schützt.

Die erfindungsgemäßen Zusammensetzungen eignen sich außerdem hervorragend zur Beschichtung von Betonoberflächen, wobei jede Art von Beton verwendet werden kann, beispielsweise Baustellenbeton, Transportbeton, Spritzbeton, Unterwasserbeton, Walzbeton, Schleuderbeton, Vakuumbeton, Aufbaubeton, Estrichbeton, Porenbeton, Faserbeton, Mineralbeton, Konkretbeton, selbstverdichtender Beton, hochfester und ultrahochfester Beton, Glasschaumbeton, Sichtbeton, Asphaltbeton, Splittbeton, Polymerbeton und Papierbeton.

Bei der Beschichtung von Betonprodukten können vorteilhaft gleichzeitig phosphoreszierende und fluoreszierende oder beide Pigmente einzeln verwendet werden. Dadurch leuchtet das Betonprodukt bei UV-Bestrahlung und bei Dunkelheit ab Eintritt der Dämmerung. Ein vorteilhafter Zusatznutzen ist, dass das Licht, welches der fluoreszierende Effekt benötigt die phosphoreszierenden Pigmente gleichzeitig auflädt. Ein Beispiel einer Anwendung von aus beschichtetem Leuchtbeton hergestellten Betonprodukten ist der Einsatz als Treppenstufen zur Markierung von Treppenstufenkanten. Hierzu können die Betonprodukte beispielsweise mit einer erfindungsgemäßen Pigment-Glas-Zusammensetzung hergestellt werden, die ein Fluoreszenzpigment mit der Tageslichtfarbe Grün und der UV-Leuchtfarbe Rot enthält. Die eingesetzte Pigmentmischung ist UV-stabil und daher zur Außenanwendung geeignet. Die grüne Tageslichtfarbe sorgt dafür, dass die Betonstufenkanten tagsüber als Blickführung für das Ende der Treppenstufe wirken und von herkömmlichen Klebestreifen fast nicht zu unterscheiden sind. Bei eintretender Dunkelheit wird die Treppenhausbeleuchtung eingeschaltet, wobei jedoch zusätzlich zu den Standardlampen auch UV-Lampen eingesetzt bzw. in den vorhandenen Lampen ergänzt werden. Sobald die UV-Lampen eingeschaltet werden, leuchten die fluoreszierenden Betonsteine in der roten Leuchtfarbe. Bei Abschalten des Lichts erlischt der Leuchteffekt und es bleibt das Nachleuchten des Phosphoreszenzpigments. Bei der Verwendung von fluoreszierenden Pigmenten kann also gegebenenfalls durch eine Beleuchtung mittels künstlicher oder natürlicher Lichtquellen während der Zeit des Aufladens ein starker Leuchteffekt erzielt werden.

Beispielhafte Verwendungen zur Herstellung von Gegenständen aus beschichtetem Betonmaterial sind Betonkieselsteine diverser Größen, Formen und Farben; Betonprodukte für den Städte- und Straßenbau, Garten- und Landschaftsbau in Form von Flächensystemen, Großformatplatten, Ökopflastern, Terrassenplatten; Gebäudeverplankungen; Fertigteile, insbesondere Fertigstufen/-treppen, Dachbetonplatten, Träger, Pfeiler; Formsteine, Betonmöbel (z.B. Bänke, Blumenkästen, Tische), Schwimmbeckenteile (z.B. Randbegrenzungen, Startblöcke, Sprungeinrichtungen), Balkone und Balkonanbauteile, Abdeckungen (z.B. Kanaldeckel, Auslassdeckel, Bedienteilmarkierungen an Abdeckungen); Klinker; Einfriedungen (z.B. Mauern, Sockelmauern); Einfassungen von Mauern; Trennwände; Fertigbauteile, insbesondere Außenwände, Randsteine, Trennelemente, Träger; Dachkonstruktionen und Dachfertigelemente; Teile von und vollständige Rampen, Gehwegen und Freiflächen und Verkehrsflächen sowie deren Abgrenzungen oder vollständige Markierungen; Teile von oder ganze Hindernisse einschließlich deren Markierungen; Hangsicherungs-Steine (L-Steine usw.); Tribünensicherungen, insbesondere Markierungen der sicherheitsrelevanten Fluchtwege bzw. Geländer und/oder andere Randbegrenzungen; stützende und nicht stützende Wände; und Abgrenzungen eingearbeitet in Böden. Betonkieselsteine, die mit den erfindungsgemäßen Lacken und Farben beschichtet sind, stellen darüber hinaus eine umweltfreundliche Alternative zu den im Handel erhältlichen "Plastiksteinen" dar.

Die erfindungsgemäßen Zusammensetzungen eignen sich auch hervorragend zur Herstellung von Kunststoff-, Papier, Stein-, Glas- und Keramikartikeln, wobei die erfindungsgemäße Zusammensetzung in die Ausgangsmaterialien ein- oder auf diese aufgebracht werden kann. Besonders gut eignen sich die erfindungsgemäßen Zusammensetzungen zur Herstellung von Glas- und Keramikartikeln, insbesondere Glasartikeln wie Glasstangen, Glassteinen, Glaskugeln und Glasfliesen, wobei als Glaspulver bevorzugt wenigstens teilweise gefärbtes Glaspulver verwendet wird. Das Glaspulver der erfindungsgemäßen Zusammensetzung kann hierbei sowohl farbloses als auch gefärbtes Glas umfassen. Zur Herstellung von Glasartikeln, beispielsweise Glasfliesen, kann beispielsweise wie in der DE-A-10130011 beschrieben verfahren werden. Üblicherweise wird dementsprechend auf einen ersten Glasabschnitt, vorzugsweise einen Glasposten aus zähflüssigem Glas, beispielsweise einen Glasrohling in der gewünschten Größe, eine Pulverschicht der erfindungsgemäßen Zusammensetzung aufgebracht, wonach ein die Schicht mit dem Phosphoreszenzpigment überdeckender zweiter Glasabschnitt, vorzugsweise ein Glasposten ebenfalls aus zähflüssigem Glas, beispielsweise ein entsprechender zweiter Glasrohling, auf den ersten Glasabschnitt, vorzugsweise den noch zähflüssigen Glasposten, aufgebracht und mit diesem unter Einschluss der Schicht mit dem Phosphoreszenzpigment verschmolzen wird. Die Anwesenheit des Glaspulvers in der erfindungsgemäßen Zusammensetzung ermöglicht dabei eine besonders gute Haftung zwischen den jeweiligen Glasabschnitten.

Die erfindungsgemäßen Lacke und Farben, die das Glaspulver und das Phosphoreszenzpigment enthalten, lassen sich somit wegen ihrer Stabilität leicht auftragen und weisen hervorragende mechanische Eigenschaften, wie Abriebfestigkeit, Druckfestigkeit, Schlagfestigkeit, Kratzfestigkeit, Säurebeständigkeit, sowie Rutschfestigkeit auf. Er erlaubt die Beschichtung jedweder Oberfläche und bietet vielfältigste Einsatzmöglichkeiten, wodurch eine kostengünstige, wartungsarme und flexible Möglichkeit geschaffen wurde, auf einfache unkomplizierte Weise lang leuchtende und dauerhafte Markierungen und Artikel bereitzustellen.

Die vorliegende Erfindung wird durch die nachfolgenden, die Erfindung nicht einschränkenden Beispiele näher erläutert.

### Beispiele

### Vergleichsbeispiel

100 g eines grün phosphoreszierenden Pigments (Fa. UV-Elements, Nordhausen, Deutschland) mit einer Teilchengröße von 25-70 µm wurden mit 150 g eines handelsüblichen Acrylharzes als Bindemittel vermischt. Die auf diese Weise erhaltene Lackzusammensetzung wurde mit einer Sprühpistole gleichmäßig auf eine gesäuberte, mit weißer Dispersionsfarbe grundierte und getrocknete Aluminium-Platte (25 x 10 cm) aufgesprüht. Nach Trocknen der ersten Schicht wurde der Spritzvorgang noch zweimal wiederholt, wobei die einzelnen Schichten jeweils gut getrocknet wurden. Anschließend wurde mit einem handelsüblichen Zweikomponenten-Klarlack mit drei Schichten versiegelt.

Die Platte wurde 4 Stunden lang Tageslicht ausgesetzt und dann in einem Dunkelraum betrachtet. Es wurde ein dunkles grünes Leuchten beobachtet, das etwa 3 Stunden sichtbar blieb.

### Beispiel 1

Parallel zu obigem Versuch wurden 30 g des grün phosphoreszierenden Pigments (Fa. UV-Elements, Nordhausen, Deutschland) und 70 g Glaspulver mit einer Teilchengröße d100 von 250 µm in 150 g des gleichen Acrylharz-Bindemittels gemischt. Die auf diese Weise erhaltene Lackzusammensetzung wurde wiederum mit einer Sprühpistole gleichmäßig auf eine gesäuberte, mit weißer Dispersionsfarbe grundierte und getrocknete Aluminium-Platte (25 x 10 cm) aufgesprüht. Nach Abtrocknen der ersten Schicht wurde der Spritzvorgang noch zweimal wiederholt, wobei die einzelnen Schichten jeweils gut getrocknet wurden. Anschließend wurde wie oben mit einem handelsüblichen Zweikomponenten-Klarlack mit drei Schichten versiegelt.

Nach 4 Stunden Lichteinwirkung unter den gleichen Bedingungen wie oben und Betrachtung im Dunkelraum wurde über 1,5 Stunden ein Leuchten in hellem Neongrün beobachtet, das signifikant heller war als das Leuchten des Pigments ohne Glaspulveranteil. Nach Abklingen dieses hellen Leuchtens kam das Standardleuchten des Pigments zum Vorschein, welches zusätzlich 4 bis 6 Stunden sichtbar blieb. Gleichzeitig wurde eine Aufhellung des bei Tag sichtbaren Farbtons beobachtet, der sich von gelb zu weißlich-gelb änderte. Das Leuchten war bei feinkörnigem Erscheinungsbild gleichmäßiger als bei der Probe ohne Glaspulver.

Die obigen Versuche zeigen, dass die Anwesenheit des Glaspulvers zu einem helleren Leuchten führt als bei Pigment ohne Glaspulver, und dass sich die Dauer des Nachleuchtens insgesamt verlängert. Es kann vermutet werden, dass dies einerseits auf eine Reflexion der emittierten Strahlung durch die Glaspartikel und andererseits auf ein rascheres Aufladen des Pigments in Gegenwart der Glaspartikel zurückzuführen ist. Außerdem führt die Anwesenheit der Glaspartikel zu einer Aufhellung des bei Tag sichtbaren Farbtons. Wegen der verschiedenen Partikelgrößen von Glaspulver und Pigment erscheint das Leuchten außerdem gleichmäßiger, und die Pigmente lassen sich stabiler dispergieren und der Lack kann besser auftragen werden.

### Beispiel 2

Zur Herstellung einer Großformatplatte aus Beton wurde eine Mischung mit weißem Portlandzement und Quarzsand hergestellt, und aus dieser Mischung wurde ein Beton hergestellt, der nach der Formgebung, Glättung und gegebenenfalls Kugelstrahlung und Beschichtung mit einer ersten speziellen Lackschicht zur Versiegelung der Betonoberfläche dann mit einem Low-Pressure-High-Volume-Lackiergerät mit einer wie in Beispiel 1 beschriebenen, mit Wasser angemischten Lackzusammensetzung besprüht wurde. Je nach Schichtdicke und Schichtanzahl wird die Leuchtkraft variiert. Nach dem Trocknen dieser Pigment-Glas-Schicht wird ein Schutzlack aufgesprüht, wobei mehreren Schichten aufgebracht wurden, um einen möglichst guten Schutz zu bewerkstelligen.

Man erhält eine Großformatplatte, die nach Anregung durch das Tageslicht nachts leuchtet. Nachts kann durch UV-Beleuchtung ein Wiederaufladen erfolgen, um die Leuchtstärke permanent hoch anzusetzen. Der Decklack auf der kristallinen Leuchtpigment-Glas-Schicht auf dem Beton sorgt für eine hohe Abriebfestigkeit und für eine dauerhafte Funktionsweise der Platte. Die so erhaltenen Platten leuchten nach ausreichender Sonnenbestrahlung oder durch künstliche UV-Beleuchtung im Dunkeln für etwa 12 Stunden nach. Die Leuchtdauer lässt sich jedoch durch die Wahl des Pigments und den Anteil des Glases beeinflussen.

### Beispiel 3

### Herstellung von leuchtenden Betonkieseln

Aus der Betonmischung von Beispiel 2 wurden über ein Tropfverfahren, wobei der flüssige Beton durch eine Dosieröffnung (Tropfring) auf ein Fließband (mit verschiedenen Steigungsgraden, einstellbar, um verschiedene Rundungsgrade zu erzielen) tropft, unregelmäßige Kieselsteine geformt. Nach dem Trocknungsvorgang wurden die Kieselsteine auf ein grobmaschiges Sieb (gerade so groß, dass die Steine nicht durchfallen) fallen gelassen und durch ein Bad mit der in Beispiel 2 verwendeten flüssigen Leichtpigment-Glas-Lackzusammensetzung fahren gelassen. Je nach Mischungsverhältnis von Basismedium, Wasser und dem eingesetzten Leuchtmischung ergaben sich unterschiedliche Viskositäten, die - in Kombination mit der Fahrgeschwindigkeit des Förderbandes - zu unterschiedlichen Beschichtungsdicken führten, was wiederum die Leuchtstärke beeinflusst. Nach dem Trocknungsvorgang wird ein Bad mit dem Decklack durchfahren, wobei auch hier die Förderbandgeschwindigkeit die Dicke des Schutzlackes bestimmt.

Die so erhaltenen Platten leuchteten nach ausreichender Sonnenbestrahlung oder durch künstliche UV-Beleuchtung im Dunkeln für etwa 12 Stunden nach. Die Leuchtdauer ließ sich durch die Wahl des Pigments und den Anteil des Glases beeinflussen.

Alternativ kann das Aufbringen des Pigmentgemisches und des Decklacks über ein High-Volume-Low Pressure-Gerät erfolgen, wobei das Förderband mit Rüttelbewegungen zur Drehung der Kiesel eingestellt sein muss.

## Patentansprüche

1. Phosphoreszierende Zusammensetzung, umfassend:
(a) Glaspulver, wobei das Glaspulver bleifreies Glaspulver ist, das ausgewählt ist aus Kalk-Natron-Gläsern, Borosilikatgläsern, Floatgläsern und Phosphatgläsern, wobei das Glaspulver eine Teilchengröße d100 von 350 µm aufweist; und
(b) Phosphoreszenzpigment, wobei das Phosphoreszenzpigment wenigstens ein gekapseltes Phosphoreszenzpigment umfasst.

2. Zusammensetzung nach Anspruch 1, wobei das Glaspulver ausgewählt ist aus Kalk-Natron-Gläsern und Borosilikatgläsern.

3. Zusammensetzung nach Anspruch 1 oder 2, wobei das Glaspulver in einer Menge von 80-20 Gew.-% und das Phosphoreszenzpigment in einer Menge von 20-80 Gew.-% vorliegt, bezogen auf das Gesamtgewicht von Glaspulver und Phosphoreszenzpigment.

4. Zusammensetzung nach einem der Ansprüche 1 bis 3, wobei das Phosphoreszenzpigment eine Teilchengröße d100 von 500 µm aufweist.

5. Zusammensetzung nach einem der Ansprüche 1 bis 4, wobei das Phosphoreszenzpigment wenigstens ein Phosphoreszenzpigment auf Basis eines Sulfids, Aluminats, Silikats oder Mischungen davon umfasst.

6. Zusammensetzung nach einem der Ansprüche 1 bis 5, wobei das Phosphoreszenzpigment wenigstens ein Phosphoreszenzpigment umfasst, dessen Emissionswellenlänge λₘₐₓ in einem Wellenlängenbereich von 380 bis 500 nm, einem Wellenlängenbereich von 510 bis 580 nm oder einem Wellenlängenbereich von 590 bis 750 nm liegt.

7. Zusammensetzung nach einem der Ansprüche 1 bis 6, wobei das gekapselte Phosphoreszenzpigment mit Glas, Kunststoff und/oder SiO₂ gekapselt ist.

8. Zusammensetzung nach Anspruch 7, wobei das gekapselte Pigment in einer Menge von wenigstens 5 Gew.-% vorliegt, bezogen auf das Gesamtgewicht des Phosphoreszenzpigments.

9. Zusammensetzung nach einem der Ansprüche 1 bis 8, wobei die Zusammensetzung ein Wolframat umfasst.

10. Zusammensetzung nach einem der Ansprüche 1 bis 9, wobei die Zusammensetzung weiterhin ein Fluoreszenzpigment umfasst.

11. Zusammensetzung nach Anspruch 10, wobei das Fluoreszenzpigment in einer Menge von wenigstens 10 Gewichtsteilen pro 100 Gewichtsteile Gesamtmasse von Glaspulver und Phosphoreszenzpigment vorliegt.

12. Zusammensetzung nach einem der Ansprüche 1 bis 11, wobei die Zusammensetzung weiterhin ein Effektpulver umfasst.

13. Farb- oder Lackzusammensetzung, umfassend ein Bindemittel sowie eine phosphoreszierende Zusammensetzung nach einem der Ansprüche 1 bis 12.

14. Farb- oder Lackzusammensetzung nach Anspruch 13, wobei das Bindemittel ein Bindemittel auf Kunststoffbasis ist.

15. Farb- oder Lackzusammensetzung nach Anspruch 13 oder 14, wobei das Bindemittel ausgewählt ist aus Bindemitteln auf Basis von Alkydharzen, Acryl- und Methacrylatharzen, Polyvinylacetat-Copolymeren, Epoxidharzen, Polyurethanen und Mischungen davon.

16. Verwendung einer Zusammensetzung nach einem der Ansprüche 1 bis 15 zur Herstellung von nachleuchtenden Artikeln.

17. Verwendung nach Anspruch 16, wobei der Artikel ein Glasartikel, insbesondere eine Glasstange, ein Glasstein, eine Glaskugel oder eine Glasfliese ist.

18. Verwendung einer Farb- oder Lackzusammensetzung nach einem der Ansprüche 13 bis 15 zur Beschichtung von Stein- und Betonprodukten.

19. Verfahren zur Herstellung eines nachleuchtenden Glasartikels, wobei auf einen ersten Glassabschnitt eine phosphoreszierende Zusammensetzung aufgebracht wird, wonach ein die Leuchtpigmentschicht überdeckender zweiter Glasabschnitt auf den ersten Glasabschnitt aufgebracht wird, der mit dem ersten Glasabschnitt unter Einschluss der phosphoreszierenden Zusammensetzung verschmolzen wird, **dadurch gekennzeichnet, dass** als phosphoreszierende Zusammensetzung eine Zusammensetzung nach einem der Ansprüche 1 bis 12 verwendet wird.

20. Verfahren nach Anspruch 19, wobei der erste Glasabschnitt ein Posten aus zähflüssigem Glas ist, auf den die phosphoreszierende Zusammensetzung aufgebracht wird, und der im noch zähflüssigen Zustand mit einem den zweiten Glasabschnitt bildenden Glasposten überstochen wird.

21. Verfahren nach einem der Ansprüche 19 oder 20, wobei der Glasartikel eine Glasstange, ein Glasstein, eine Glaskugel oder eine Glasfliese ist.

## Claims

1. A phosphorescent composition, comprising:
(a) glass powder, the glass powder being lead-free glass powder selected from lime soda glass, borosilicate glass, float glass and phosphate glass, wherein the glass powder has a particle size d100 of 350 µm; and
(b) phosphorescent pigment, wherein the phosphorescent pigment comprises at least one encapsulated phosphorescent pigment.

2. The composition according to claim 1, wherein the glass powder is selected from lime soda glass and borosilicate glass.

3. The composition according to claim 1 or 2, wherein the glass powder is present in an amount of from 80-20 wt.-% and the phosphorescent pigment is present in an amount of from 20-80 wt.-%, based on the total weight of glass powder and phosphorescent pigment.

4. The composition according to any one of claims 1 to 3,
wherein the phosphorescent pigment has a particle size d100 of 500 µm.

5. The composition according to any one of claims 1 to 4,
wherein the phosphorescent pigment comprises at least one of a sulfide based phosphorescent pigment, aluminate based phosphorescent pigment, silicate based phosphorescent pigment or mixtures thereof.

6. The composition according to any one of claims 1 to 5, wherein the phosphorescent pigment comprises at least one phosphorescent pigment having an emission wavelength λₘₐₓ in a wavelength range of from 380 to 500 nm, a wavelength range of from 510 to 580 nm or a wavelength range of from 590 to 750 nm.

7. The composition according to any one of claims 1 to 6, wherein the encapsulated phosphorescent pigment is encapsulated with glass, plastics and/or SiO₂.

8. The composition according to claim 7, wherein the encapsulated pigment is present in an amount of at least 5 wt.-%, based on the total weight of the phosphorescent pigment.

9. The composition according to any one of claims 1 to 8, wherein the composition comprises a tungstate.

10. The composition according to any one of claims 1 to 9, wherein the composition further comprises a fluorescent pigment.

11. The composition according to claim 10, wherein the fluorescent pigment is present in an amount of at least 10 parts by weight per 100 parts by weight of total mass of glass powder and phosphorescent pigment.

12. The composition according to any one of claims 1 to 11, wherein the composition further comprises an effect imparting powder.

13. A paint or lacquer composition, comprising a binder as well as a phosphorescent composition according to any one of claims 1 to 12.

14. The paint or lacquer composition according to claim 13,
wherein the binder is a resin based binder.

15. The paint or lacquer composition according to claim 13 or 14, wherein the binder is selected from alkyd resin based binders, acryl and methacrylate resin based binders, polyvinyl acetate copolymer based binders, epoxide resin based binders, polyurethane based binders and mixtures thereof.

16. Use of a composition according to any one of claims 1 to 15 for producing phosphorescent articles.

17. Use according to claim 16, wherein the article is a glass article, in particular a glass rod, a glass stone, a glass sphere or a glass tile.

18. Use of a paint or lacquer composition according to any one of claims 13 to 15 for coating stone and concrete products.

19. A process for producing a phosphorescent glass article,
wherein a phosphorescent composition is applied to a first glass portion, thereafter a second glass portion covering the phosphorescent pigment layer is applied to the first glass portion, the second glass portion being fused together with the first glass portion thereby including the phosphorescent composition, **characterized in that** the phosphorescent composition as used is a composition according to any one of claims 1 to 12.

20. The process according to claim 19, wherein the first glass portion is a gob of viscous glass, to which the phosphorescent composition is applied, and which is covered while still in a viscous state with a gob forming the second glass portion.

21. The process according to any one of claims 19 or 20, wherein the glass article is a glass rod, a glass stone, a glass sphere or a glass tile.

## Revendications

1. Composition phosphorescente, comprenant :
(a) de la poudre de verre, la poudre de verre étant de la poudre de verre exempte de plomb, laquelle est choisie parmi des verres de chaux sodée, des verres de borosilicate, des verres flottés et des verres de phosphate, la poudre de verre présentant une taille de particule d100 de 350 µm ; et
(b) un pigment de phosphorescence, le pigment de phosphorescence comprenant au moins un pigment de phosphorescence encapsulé.

2. Composition selon la revendication 1, la poudre de verre étant choisie parmi des verres de chaux sodée et des verres de borosilicate.

3. Composition selon la revendication 1 ou 2, la poudre de verre étant présente dans une quantité de 80-20 % en masse et le pigment de phosphorescence dans une quantité de 20-80 % en masse, par rapport à la masse totale de poudre de verre et de pigment de phosphorescence.

4. Composition selon l'une quelconque des revendications 1 à 3, le pigment de phosphorescence présentant une taille de particule d100 de 500 µm.

5. Composition selon l'une quelconque des revendications 1 à 4, le pigment de phosphorescence comprenant au moins un pigment de phosphorescence à base d'un sulfure, d'un aluminate, d'un silicate ou de mélanges de ceux-ci.

6. Composition selon l'une quelconque des revendications 1 à 5, le pigment de phosphorescence comprenant au moins un pigment de phosphorescence dont la longueur d'onde d'émission λₘₐₓ se trouve dans un domaine de longueur d'onde de 380 à 500 nm, un domaine de longueur d'onde de 510 à 580 nm et un domaine de longueur d'onde de 590 à 750 nm.

7. Composition selon l'une quelconque des revendications 1 à 6, le pigment de phosphorescence encapsulé étant encapsulé avec du verre, de la matière plastique et/ou SiO₂.

8. Composition selon la revendication 7, le pigment encapsulé étant présent dans une quantité d'au moins 5 % en masse, rapporté à la masse totale du pigment de phosphorescence.

9. Composition selon l'une quelconque des revendications 1 à 8, la composition comprenant un tungstate.

10. Composition selon l'une quelconque des revendications 1 à 9, la composition comprenant de plus un pigment de fluorescence.

11. Composition selon la revendication 10, le pigment de fluorescence étant présent dans une quantité d'au moins 10 parties en masse pour 100 parties en masse de masse totale de poudre de verre et de pigment de phosphorescence.

12. Composition selon l'une quelconque des revendications 1 à 11, la composition comprenant de plus une poudre d'effet.

13. Composition de couleur ou de laque, comprenant un liant ainsi qu'une composition phosphorescente selon l'une quelconque des revendications 1 à 12.

14. Composition de couleur ou de laque selon la revendication 13, le liant étant un liant à base de matière plastique.

15. Composition de couleur ou de laque selon la revendication 13 ou 14, le liant étant choisi parmi des liants à base de résines alkyde, de résines acryliques et méthacryliques, de copolymères de poly(acétate de vinyle), de résines époxyde, de polyuréthanes et de mélanges de ceux-ci.

16. Utilisation d'une composition selon l'une quelconque des revendications 1 à 15 pour la préparation d'articles postluminescents.

17. Utilisation selon la revendication 16, l'article étant un article de verre, en particulier une barre de verre, une pierre de verre, une bille de verre ou un carreau de verre.

18. Utilisation d'une composition de couleur ou de laque selon l'une quelconque des revendications 13 à 15 pour le revêtement de produits de pierre et de béton.

19. Procédé pour la préparation d'un article de verre postluminescent, une composition phosphorescente étant appliquée sur un premier tronçon de verre, sur quoi un deuxième tronçon de verre recouvrant la couche de pigment luminescent est appliqué sur le premier tronçon de verre, lequel est fondu avec le premier tronçon de verre avec l'inclusion de la composition phosphorescente, **caractérisé en ce que** l'on utilise comme composition phosphorescente une composition selon l'une quelconque des revendications 1 à 12.

20. Procédé selon la revendication 19, le premier tronçon de verre étant un produit constitué de verre visqueux, sur lequel la composition phosphorescente est appliquée, et lequel est revêtu dans un état encore visqueux avec un second produit de verre formant le second tronçon de verre.

21. Procédé selon l'une quelconque des revendications 19 ou 20, l'article de verre étant une barre de verre, une pierre de verre, une bille de verre ou un carreau de verre.
